# EUROPÄISCHE PATENTSCHRIFT

(11) **EP 3 078 036 B1**
(45) Veröffentlichungstag und Bekanntmachung des Hinweises auf die Patenterteilung: **04.10.2017**
(21) Anmeldenummer: 14802370.8
(22) Anmeldetag: 14.11.2014
(51) Int. Cl.: H01F 7/08, H01F 7/127, B60K 6/12, F16K 31/40, F16K 31/06

(54) **VENTIL FÜR EIN HYDRAULISCHES HYBRIDSYSTEM**
VALVE FOR A HYDRAULIC HYBRID SYSTEM
SOUPAPE POUR SYSTÈME HYBRIDE HYDRAULIQUE

(30) Priorität: 04.12.2013 DE 102013224820
(43) Veröffentlichungstag der Anmeldung: 12.10.2016
(73) Patentinhaber: Robert Bosch GmbH, 70442 Stuttgart (DE)
(72) Erfinder: RAU, Klaus-Juergen, 71672 Marbach (DE); MIEHLE, Tilman, 71334 Waiblingen (DE); HOWEY, Friedrich, 71254 Ditzingen (DE); FERRARO, Giovanni, 71642 Ludwigsburg (DE)
(86) Internationale Anmeldenummer: PCT/EP2014/074605
(87) Internationale Veröffentlichungsnummer: WO 2015/082194

(56) Entgegenhaltungen:
- WO-A1-02/50462
- DD-A1- 232 506
- DE-A1-102009 051 574
- DE-A1-102009 060 406
- DE-A1-102012 208 687
- DE-B3-102008 055 972

## Beschreibung

Die vorliegende Erfindung betrifft ein Ventil gemäß dem Oberbegriff des Anspruches 1 und ein hydraulisches Hybridsystem gemäß dem Oberbegriff des Anspruches 14.

### Stand der Technik

Ventile werden in einer Vielzahl technischer Anwendungen zur Steuerung des Volumenstroms eines Fluids, insbesondere einer Flüssigkeit, eingesetzt. Elektromagnetisch gesteuerte Ventile weisen einen Elektromagneten auf und mittels des Elektromagneten kann das Ventil geöffnet und geschlossen werden. Dabei sind auch Ventile mit einem Hauptventilkolben bekannt, bei welcher die Bewegung des Hauptventilkolbens zwischen einer Öffnungsstellung und einer Schließstellung aufgrund eines unterschiedlichen Drucks in einem Steuerraum hydraulisch steuerbar ist. Der Druck des Fluids in dem Steuerraum wird dabei von einem Anker mit einem Steuerventilkolben gesteuert. Dies ist erforderlich, da der Elektromagnet keine ausreichenden Magnetkräfte aufbringt für die erforderliche Bewegung des Hauptventilkolbens, da bei großen Drücken an dem Hauptventilkolben große Kräfte zum Bewegen des Hauptventilkolbens erforderlich sind. Ein Anker wird von dem Elektromagneten bewegt und dabei ist der Anker in einer Bohrung eines Polrohrs gelagert und das Polrohr weist dabei an der Bohrung auch einen Kontakt zu dem Steuerraum auf. Das Polrohr an dem Steuerraum und der Bohrung für den Anker besteht dabei aus einem weichmagnetischen Automatenstahl. Bei einem Einsatz des Ventils für ein Fluid, insbesondere eine Flüssigkeit unter hohen Drücken, zum Beispiel zur Steuerung einer Flüssigkeit mit einem Druck von 500 bar, reicht die Härte des Werkstoffs bzw. des Materials von Automatenstahl nicht aus und es ist hartmagnetischer Vergütungsstahl an dem Polrohr an der Bohrung sowie an dem Steuerraum erforderlich, um die auftretenden hohen Kräfte bei den hohen Drücken aufnehmen zu können. Der hartmagnetische Vergütungsstahl weist jedoch eine hohe Remanenz auf, sodass bei einer Unterbrechung der Bestromung des Elektromagneten bzw. der Spule ein hoher Restmagnetismus in dem gesamten Polrohr verbleibt und dadurch der Anker nicht von einer Schließfeder in eine andere Steuerposition bewegt werden kann. Dadurch ist die Funktionsfähigkeit des elektromagnetisch betätigten Ventils eingeschränkt, da bei einer Abschaltung der Bestromung des Elektromagneten kein Schließen oder nur ein Schließen unter einer großen zeitlichen Verzögerung auftritt und dadurch eine ausreichende Funktionsfähigkeit in den meisten technischen Anwendungen nicht mehr gewährleistet ist.

Aus der DE 10 2011 003 172 A1 ist eine Kraftstoffzumesseinheit für eine Kraftstoffeinspritzanlage einer Brennkraftmaschine bekannt. Eine Hochdruckpumpe ist mit der Kraftstoffzumesseinheit verschalten, wobei die Zumesseinheit ein von einem Elektromagneten betätigtes Regelventil aufweist und das Regelventil einen gegen die Kraft einer Druckfeder von einem Ankerbolzen des Elektromagneten verstellbaren Ventilkolben zur Steuerung einer Steueröffnung aufweist.

Aus der WO 02/50462 A1 ist ein elektromagnetisches 2/2 Wege Ventil mit einem Ventilkolben und einem beweglichen Anker bekannt.

Die DE 10 2009 051574 A1 zeigt ein Magnetventil für eine Ansteuerung eines Fluids mit einem ersten Gehäuseteil mit einer Axialführung für einen Magnetanker.

Aus der DE 10 2009 060406 A1 ist Pohlrohr eines Elektromagneten bekannt, wobei das Pohlrohr ein Rohrelement aufweist, welches zumindest teilweise von einem Polstück verschlossen wird.

Aus der DD 232 506 A1 ist ein Herstellverfahren für ein druckfestes Ankerführungsrohr für elektrisch betätigte Ventile bekannt.

Die DE 10 2008 055972 B3 offenbart ein Magnetventil mit zwei Gehäuseteilen, wobei das erstes Gehäuseteil eine höhere Zugfestigkeit aufweist als das zweite Gehäuseteil.

Die DE 10 2012 208687 offenbart ein Hydrauliksystem, sowie ein Hydraulikantriebstrang für ein Kraftfahrzeug und ein Verfahren zum Betreiben eines Hydraulikantriebstrangs eines Kraftfahrzeugs.

### Offenbarung der Erfindung

### Vorteile der Erfindung

Erfindungsgemäßes Ventil, insbesondere für ein hydraulisches Hybridsystem, umfassend einen Elektromagneten zum Bewegen eines Ankers, einen Steuerventilkolben, welcher in mechanischer Wirkverbindung mit dem beweglichen Anker steht, so dass eine Bewegung des Ankers eine Bewegung des Steuerventilkolbens bedingt und der Steuerventilkolben zwischen einer ersten Steuerposition und einer zweiten Steuerposition bewegbar ist, den beweglichen Anker, ein Polrohr mit einer Bohrung zur Lagerung des beweglichen Ankers, einen Steuerraum in dem der Druck eines Fluides, insbesondere einer Flüssigkeit, innerhalb des Steuerraumes aufgrund einer unterschiedlichen Steuerposition des Steuerventilkolbens veränderbar ist, einen aufgrund eines unterschiedlichen Druckes des Fluides in dem Steuerraum hydraulisch zwischen einer Schließstellung und einer Öffnungsstellung beweglichen Hauptventilkolben, so dass in der Schließstellung des Hauptventilkolbens das Ventil geschlossen und in der Öffnungsstellung des Hauptventilkolbens das Ventil geöffnet ist, wobei das Polrohr einen ersten Abschnitt mit der Bohrung und einen zweiten Abschnitt außerhalb der Bohrung aufweist und der erste Abschnitt aus einem mechanisch hartem und einem hartmagnetischen Material aufgebaut ist und der zweite Abschnitt aus einem weichmagnetischen Material aufgebaut ist, um einen geringen Restmagnetismus an dem Anker nach einem Abschalten des Elektromagneten und eine große mechanische Widerstandsfähigkeit des ersten Abschnittes des Polrohres zu erhalten. Das Polrohr weist den ersten Abschnitt mit der Bohrung und den zweiten Abschnitt außerhalb der Bohrung auf. Der Steuerraum weist dabei auch einen fluidleitenden Kontakt zu dem ersten Abschnitt des Polrohrs auf und aufgrund der Ausbildung des Polrohres an dem ersten Abschnitt aus dem mechanisch hartem Material kann das Polrohr den hohen mechanischen Beanspruchungen auch bei großen Drücken von zum Beispiel 500 bar von Flüssigkeiten, zum Beispiel Hydraulikflüssigkeit, in dem Steuerraum standhalten. Der von dem Elektromagneten erzeugte magnetische Fluss wird dabei überwiegend durch den zweiten Abschnitt aus dem weichmagnetischen Material geleitet und nur in einem sehr geringen Umfang durch den ersten Abschnitt mit dem hartmagnetischen Material. Dadurch tritt auch bei einer Abschaltung der Bestromung des Elektromagneten ein geringer Restmagnetismus an dem Polrohr auf, da die Masse oder das Volumen des Polrohres an dem zweiten Abschnitt im Bereich des magnetischen Flusses wesentlich größer ist, insbesondere um das 1,2-, 2-, 3- oder 5-Fache größer ist, als die Masse oder das Volumen des ersten Abschnitts aus dem hartmagnetischen Material, sodass dadurch der Einfluss des ersten Abschnitts aus dem hartmagnetischen Material für den Restmagnetismus nach der Abschaltung des Elektromagneten gering ist. Dadurch tritt nach der Abschaltung des Elektromagneten ein geringer Restmagnetismus auf und andererseits kann das Ventil den hohen Kräften aufgrund eines Fluides, insbesondere einer Flüssigkeit unter Hochdruck standhalten, sodass nach der Abschaltung des Elektromagneten mit einer sehr kleinen zeitlichen Verzögerung der Hauptventilkolben von der Öffnungsstellung in die Schließstellung oder umgekehrt bewegt wird.
Erfindungsgemäß weist das mechanisch harte Material des ersten Abschnittes eine Härte nach Rockwell von mehr als 30 HRC auf und das weichmagnetische Material des zweiten Abschnittes weist eine Koerzitivfeldstärke von kleiner als 1000 A/m auf und das hartmagnetische Material des ersten Abschnittes weist eine Koerzitivfeldstärke von größer als 1000 A/m auf und das Material des ersten Abschnittes ist Vergütungsstahl und das Material des zweiten Abschnittes ist Automatenstahl. In einer ergänzenden Variante weist das Ventil eine Längsachse auf, insbesondere ist die Längsachse identisch zu einer Bewegungsachse des Ankers, und eine fiktive Ebene senkrecht zu der Längsachse schneidet den zweiten Abschnitt und den Elektromagneten und vorzugsweise den ersten Abschnitt und der minimale axiale Abstand des Ankers zu dem zweiten Abschnitt des Polrohres kleiner ist als der Durchmesser des Ankers und der minimale axiale Abstand des Ankers zu dem zweiten Abschnitt des Polrohres zwischen dem 0,5- oder 3-Fachen der radialen Wandstärke des ersten Abschnitt des Polrohres an dem Anker beträgt und der erste und zweite Abschnitt des Polrohres wenigstens teilweise unterschiedliche axiale Abschnitte des Polrohres sind.

In einer zusätzlichen Ausführungsform umfasst das Ventil einen Hauptzylinder und der Hauptventilkolben ist an dem Hauptzylinder beweglich gelagert und das Ventil umfasst den Hauptzylinder und eine Zulauföffnung und eine Ablauföffnung des Ventils ist an dem Hauptzylinder ausgebildet und in der Schließstellung des Hauptventilkolbens ist die Zulauföffnung mittelbar oder unmittelbar von dem Hauptventilkolben verschlossen und in der Öffnungsstellung des Hauptventilkolbens ist die Zulauföffnung geöffnet, so dass eine fluidleitende Verbindung zwischen der Zulauföffnung und der Ablauföffnung besteht.

In einer ergänzenden Variante ist das Polrohr, insbesondere ausschließlich, an dem ersten Abschnitt mit dem Hauptzylinder verbunden, insbesondere mit einer Schraub- oder Pressverbindung. Das Polrohr und der Hauptzylinder sind somit getrennte Bauteile, welche mit einer Schraub- oder Pressverbindung miteinander verbunden sind und ferner sind das Polrohr und der Hauptzylinder mit einer Dichtung fluiddichtend voneinander abgedichtet.

In einer weiteren Ausgestaltung steht der Steuerraum in fluidleitendem Kontakt zu dem ersten Abschnitt des Polrohres, insbesondere ist der Steuerraum von dem ersten Abschnitt des Polrohres begrenzt, und der Steuerraum steht in keinem fluidleitenden Kontakt zu dem zweiten Abschnitt des Polrohres.

In einer ergänzenden Ausgestaltung schneidet eine fiktive Ebene, insbesondere sämtliche fiktive Ebenen, senkrecht zu der Längsachse des Ventils, welche den Elektromagneten schneiden, auch den ersten Abschnitt des Polrohres und eine fiktive Ebene senkrecht zu der Längsachse des Ventils, welche den zweiten Abschnitt des Polrohres schneidet, ist außerhalb des Elektromagneten. Zweckmäßig sind der erste Abschnitt und der zweite Abschnitt des Polrohres aus getrennten Bauteilen ausgebildet. Der erste und der zweite Abschnitt sind in vorteilhafter Weise aus getrennten Bauteilen hergestellt und werden anschließend zusammengefügt, sodass diese besonders einfach und preiswert aus dem unterschiedlichen Material hergestellt werden können.

In einer ergänzenden Ausführungsform ist der erste Abschnitt des Polrohres von einem Polrohrbefestigungsteil und der zweite Abschnitt des Polrohres von einem Polrohrstutzen, insbesondere einer Polrohrschraube, gebildet.

In einer zusätzlichen Ausgestaltung ist der erste Abschnitt des Polrohres mit einer Schraub- oder Pressverbindung mit dem zweiten Abschnitt des Polrohres verbunden, insbesondere ist ein Außengewinde des Polrohrstutzens mit einem Innengewinde an dem Polrohrbefestigungsteil verschraubt. Mit einer Schraubverbindung kann der erste Abschnitt besonders einfach mit dem zweiten Abschnitt verschraubt werden und ferner kann dadurch besonders einfach aufgrund zweier Absätze an dem Polrohr eine Elektromagnetenbaugruppe und mit einer axialen Druckkraft an zwei Absätzen des Polrohres eingespannt werden.

In einer ergänzenden Ausführungsform umfasst das Ventil eine Elektromagnetenbaugruppe mit dem Elektromagneten als Spule, einem Magnetgehäuse, vorzugsweise einen Magnettopf, vorzugsweise einem Magnetring, vorzugsweise einem elektrischen Stecker. Das Magnetgehäuse ist dabei vorzugsweise mittels Spritzgießen aus Kunststoff hergestellt und dient zur fluiddichten Abdichtung des Elektromagneten bezüglich der Umgebung. Der Magnettopf und der Magnetring aus Eisen dient zum Leiten des magnetischen Flusses.

In einer ergänzenden Ausführungsform weist das Polrohr einen ersten Absatz, insbesondere an dem zweiten Abschnitt des Polrohres, und einen zweiten Absatz, insbesondere an dem ersten Abschnitt des Polrohres, auf und die Elektromagnetenbaugruppe ist zwischen dem ersten und zweiten Absatz unter einer Druckvorspannung eingespannt, insbesondere mit einem, vorzugsweise ringförmigen, elastischen Element. Die Elektromagnetenbaugruppe, insbesondere das Magnetgehäuse der Elektromagnetenbaugruppe, ist zwischen dem ersten und zweiten Absatz des Polrohres unter einer axialen Druckkraft vorgespannt. Das elastische Element dient dazu, um temperaturbedingte axiale Längenänderungen, insbesondere des Polrohres aus Metall, auszugleichen, sodass dadurch ständig eine axiale Druckspannung zwischen dem ersten und zweiten Absatz des Polrohres und der Elektromagnetenbaugruppe vorhanden ist.

In einer weiteren Ausführungsform sind die Elektromagnetenbaugruppe, insbesondere das Magnetgehäuse, mit einer ersten, vorzugsweise ringförmigen, Dichtung und einer zweiten, vorzugsweise ringförmigen Dichtung, bezüglich des Polrohres abgedichtet und die erste und zweite Dichtung weisen einen axialen Abstand in Richtung der Längsachse des Ventils auf. Mit den beiden Dichtungen ist die Elektromagnetenbaugruppe bezüglich des Polrohres abgedichtet, sodass zu der Elektromagnetenbaugruppe, insbesondere zu dem Elektromagneten sowie in den Raum, insbesondere Ringraum, zwischen der Elektromagnetenbaugruppe und dem Polrohr von außen keine Flüssigkeiten oder Fluide eindringen können.

In einer ergänzenden Ausführungsform ist das elastische Element von der ersten und/oder zweiten Dichtung gebildet. Das elastische Element zur ständigen Druckvorspannung der Elektromagnetenbaugruppe zwischen den beiden Absätzen des Polrohres kann auch von der ersten und/oder zweiten Dichtung gebildet sein, sodass kein gesondertes elastisches Element erforderlich ist und dadurch ein Bauteil eingespart werden kann.

Erfindungsgemäßes hydraulisches Hybridsystem für ein Kraftfahrzeug, umfassend einen hydraulischen Motor zur Umwandlung von hydraulischer Energie in mechanische Energie, eine hydraulische Pumpe zur Umwandlung von mechanischer Energie in hydraulische Energie, einen Hochdruckspeicher zur Speicherung von hydraulischer Energie, einen Niederdruckspeicher zur Speicherung von hydraulischer Energie, wenigstens eine Hydraulikleitung, wenigstens ein Ventil zur Steuerung eines Volumenstromes einer Hydraulikflüssigkeit, wobei das wenigstens eine Ventil als ein in dieser Schutzrechtsanmeldung beschriebenes Ventil ausgebildet ist.

In einer weiteren Ausführungsform ist das Ventil an einer Hydraulikleitung des hydraulischen Hybridsystems angeordnet zum Öffnen und Schließen der Hydraulikleitung, z. B. eine Hydraulikleitung an dem Hochdruckspeicher zum Öffnen und Schließen des Hochdruckspeichers.

In einer zusätzlichen Ausführungsform sind der Anker und vorzugsweise der Steuerventilkolben sowie der Hauptventilkolben koaxial zueinander ausgebildet.

In einer ergänzenden Ausführungsform ist die Bewegungsachse des Ankers sowie des Steuerventilkolbens identisch zu einer Bewegungsachse des Ventilkolbens und vorzugsweise sind die beiden Bewegungsachsen des Ankers und des Steuerventilkolbens sowie des Hauptventilkolbens identisch zu einer Längsachse des Ventils.

In einer ergänzenden Ausführungsform ist das Polrohr und der Hauptzylinder koaxial ausgebildet.

In einer zusätzlichen Ausgestaltung sind zwischen dem Elektromagneten als Spule und dem Anker in radialer Richtung der erste Abschnitt des Polrohres angeordnet.

Vorzugsweise ist eine radiale Richtung senkrecht zu der Längsachse und/oder Bewegungsachse des Ankers und/oder senkrecht zu der Längsachse des Ventils ausgerichtet.

In einer weiteren Variante ist der hydraulische Motor und/oder die hydraulische Pumpe als eine Schrägscheibenmaschine ausgebildet.

In einer weiteren Ausführungsform umfasst der Antriebsstrang zwei Schrägscheibenmaschinen, welche hydraulisch miteinander verbunden sind und als hydraulisches Getriebe fungieren.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: einen Längsschnitt eines Ventils in einem ersten Ausführungsbeispiel,
- Fig. 2: einen Längsschnitt des Ventils in einem zweiten Ausführungsbeispiel,
- Fig. 3: einen Längsschnitt des Ventils in einem dritten Ausführungsbeispiel und
- Fig. 4: eine stark schematisierte Ansicht eines hydraulischen Hybridsystems.

### Ausführungsformen der Erfindung

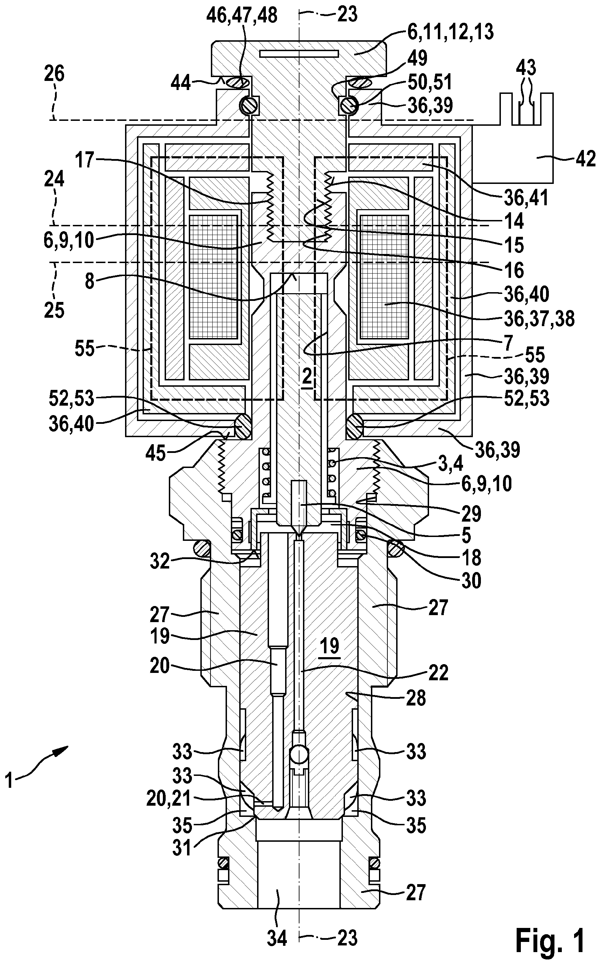

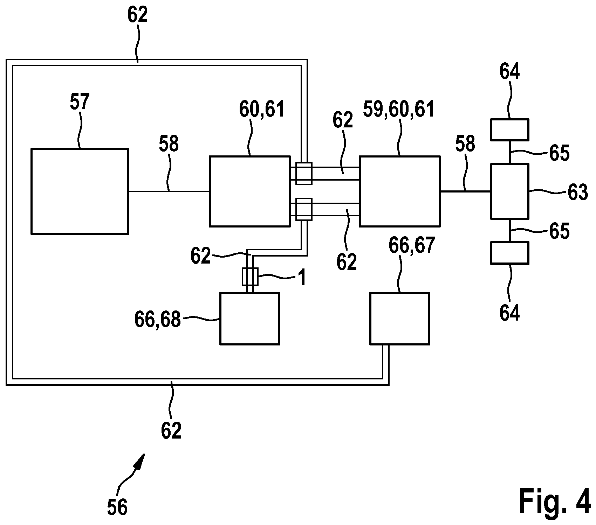

In Fig. 1 ist ein Längsschnitt des elektromagnetisch betätigbaren Ventils 1 in einem ersten Ausführungsbeispiel dargestellt. Das Ventil 1 wird insbesondere in einem in Fig. 4 dargestellten hydraulischen Hybridsystem 56 eingesetzt. In Fig. 1 ist eine Schließstellung des Ventils 1 dargestellt. Das Ventil 1 umfasst ein Polrohr 6, welches zweiteilig ausgebildet ist mit einem ersten Abschnitt 9 als einem Polrohrbefestigungsteil 10 aus einem mechanisch hartem und einem hartmagnetischen Material, nämlich Vergütungsstahl und einen zweiten Abschnitt 11 des Polrohres 6 als einem Polrohrstutzen 12 als Polrohrschraube 13, welcher aus einem weichmagnetischen Material aufgebaut ist, nämlich Automatenstahl. In dem Polrohrbefestigungsteil 10 als dem ersten Abschnitt 9 des Polrohres 6 ist eine Befestigungsbohrung 16 mit einem Innengewinde 15 ausgebildet und die Polrohrschraube 13 weist an einem unteren Endabschnitt ein Außengewinde 14 auf. Das Außengewinde 14 des Polrohrstutzens 12 ist in das Innengewinde 15 an der Befestigungsbohrung 16 des Polrohrbefestigungsteils 10 eingeschraubt, sodass eine Schraubverbindung 17 zwischen dem Polrohrbefestigungsteil 10 und dem Polrohrstutzen 12 besteht. Zum Aufbringen eines Drehmoments auf die Polrohrschraube 13 weist diese am oberen Endbereich einen Normensechskant auf.

Der erste Abschnitt 9 des Polrohres 6 weist eine zylinderförmige Bohrung 7 auf, innerhalb dessen ein Anker 2 beweglich in Richtung einer Längsachse 23 des Ventils 1 gelagert ist. In Fig. 1 ist eine Schließstellung als erste Steuerposition des Ankers 2 dargestellt und an dem Anker 2 ist ein Steuerventilkolben 5 befestigt, sodass eine Bewegung des Ankers 2 auch eine axiale Bewegung des Steuerventilkolbens 5 bedingt. In der in Fig. 1 dargestellten Schließstellung des Ankers 2 und des Steuerventilkolbens 5 weist ein oberes Ende des Ankers 2 einen Abstand zu dem oberen Ende der Bohrung 7 auf, da der Anker 2 von einem elastischen Schließelement 3 als einer Schließfeder 4 in die in Fig. 1 dargestellte Schließstellung gedrückt ist. Bei einer Bestromung eines Elektromagneten 37 mit einer Spule 38 wird der Anker 2 mit dem Steuerventilkolben 5 entgegen der von der Schließfeder 4 auf den Anker 2 aufgebrachten Schließkraft in eine Öffnungsstellung als zweite Steuerposition nach oben bewegt, sodass ein oberes axiales Ende des Ankers 2 auf dem oberen Ende als Ankeranschlag 9 der axialen Bohrung 7, das heißt an dem Polrohrbefestigungsteil 10, aufliegt, bei einem unmittelbaren Kontakt, sodass kein Luftspalt zwischen dem oberen Ende des Ankers 2 und dem Polrohrbefestigungsteil 10 an dem axialen Ende der Bohrung 7 vorhanden ist, sodass ein magnetischer Fluss 55 durch den Anker 2 und zu dem Polrohrbefestigungsteils 10 geleitet werden kann.

Der Elektromagnet 37 ist in eine Elektromagnetenbaugruppe 36 eingebaut. Diese umfasst neben dem Elektromagneten 37 als Spule 38 einen Magnettopf 40, welcher im Wesentlichen rotationssymmetrisch zu der Längsachse 23 ausgebildet ist und einen ringförmigen Magnetring 41, welcher ebenfalls rotationssymmetrisch zu der Längsachse 23 ausgebildet ist. Mittels eines elektrischen Steckers 42 mit elektrischen Kontaktelementen 43 und einem nicht dargestellten elektrischen Gegenstecker mit elektrischen Gegenkontaktelementen kann die Spule 38 bestromt werden.

Das Polrohr 6 weist einen oberen ersten Absatz 44 an dem zweiten Abschnitt 11 als der Polrohrschraube 13 und einen unteren zweiten Absatz 45 an dem ersten Abschnitt 9 als dem Polrohrbefestigungsteil 10 auf. Die Elektromagnetenbaugruppe 36 ist von einem Magnetgehäuse 39 als einer Umspritzung 39 aus thermoplastischem Kunststoff teilweise umgeben (kein Magnetgehäuse 39 an der radialen Innenseite des Magnetringes 41 und des Magnettopfes 40 sowie axial zwischen dem Magnetring 41 und dem Magnettopf 40) und ein oberes Ende dieses Magnetgehäuses 39 liegt auf einem ringförmigen elastischen Element 46 auf und das ringförmige elastische Element 46 liegt auf dem ersten Absatz 44 auf. Ein unteres Ende des Magnetgehäuses 39 liegt unmittelbar auf dem zweiten Absatz 45 des Polrohres 6 auf. Beim Verschrauben der Polrohrschrauben 13 mit dem Polrohrbefestigungsteil 10 in der Befestigungsbohrung 16 wird dabei das Einschrauben dahingehend ausgeführt, dass das Magnetgehäuse 39 und das ringförmige elastische Element 46 unter einer axialen Druckvorspannung auf den beiden Absätzen 44, 45 aufliegen. Das ringförmige elastische Element 46 ist erforderlich, um temperaturbedingte Längenänderungen des Polrohres 6 auszugleichen, sodass das Magnetgehäuse 39 ständig unter der axialen Druckvorspannung auf den beiden Absätzen 44, 45 aufliegt. Das ringförmige elastische Element 46 ist dabei beispielsweise als eine Fächerscheibe 47 ausgebildet und die Zähne der Fächerscheibe 47 sinken lokal in das Magnetgehäuse 39 ein und dabei sind die Zähne der Fächerscheibe 47 dahingehend gebogen, dass sich diese bei einer Drehrichtung der Polrohrschraube 13 zum Aufschrauben der Schraubverbindung 17 gegen die Drehbewegung der Polrohrschraube 13 verkeilen und dadurch eine hohe Sicherheit gegen ein Lösen der Polrohrschraube 13 vorhanden ist. Abweichend von der Fächerscheibe 47 aus Metall kann das ringförmige elastische Element 46 auch als eine Federscheibe 48 ausgebildet sein. Der Magnetring 41 und der Magnettopf 40 liegt unmittelbar an der radialen Innenseite auf dem Polrohr 6 auf, damit der magnetische Fluss 55 übertragen werden kann. Für die Auflage des Magnetringes 41 weist der Polrohrstutzen 12 axial zwischen dem Außengewinde 14 und dem zweiten Absatz 44 einen größeren Durchmesser auf als an dem Außengewinde 14.

Die Polrohrschraube 13 weist eine Ringnut 49 auf und innerhalb der Ringnut 49 ist eine erste Dichtung 50 als eine erste O-Ring-Dichtung 51 angeordnet. Dabei ist die erste Dichtung 50 unter einer radialen Vorspannung zwischen der Polrohrschraube 13 und dem Magnetgehäuse 39 eingespannt, sodass dadurch eine zuverlässige Abdichtung an der ersten Dichtung 50 gewährleistet ist. Eine zweite Dichtung 52 liegt auf dem zweiten Absatz 45 des Polrohrbefestigungsteils 10 auf und liegt unter einer radialen Vorspannung zwischen dem Magnetgehäuse 39 und dem Polrohrbefestigungsteil 10 auf, sodass die zweite Dichtung 52 als einer zweiten O-Ring-Dichtung 53 ebenfalls eine zuverlässige Abdichtung gewährleistet zwischen dem Magnetgehäuse 39 und dem Polrohr 6 axial zwischen den beiden Dichtungen 50, 52. Das Magnetgehäuse 39 ist radial nach außen fluiddicht.

Ein Hauptzylinder 27 weist eine Befestigungsbohrung 29 auf und an der Befestigungsbohrung 29 des Hauptzylinders 27 ist das Polrohr 6, nämlich das Polrohrbefestigungsteil 10, mit einer Schraub- oder Pressverbindung befestigt. Eine Dichtung 30 dichtet fluiddicht das Polrohr 6 bezüglich des Hauptzylinders 27 ab. Der Hauptzylinder 27 weist eine Hauptbohrung 28 zur Lagerung eines Hauptventilkolbens 19 auf. Der Hauptventilkolben 19 ist in der Hauptbohrung 28 beweglich bezüglich der Längsachse 23 als der Bewegungsachse des Hauptventilkolbens 19 zwischen einer Schließstellung einer Öffnungsstellung beweglich gelagert. In Fig. 1 ist eine Schließstellung des Hauptventilkolbens 19 dargestellt, sodass eine radiale Zulauföffnung 33 an dem Hauptzylinder 27 keine fluidleitende Verbindung zu einer axialen Ablauföffnung 34 an dem Hauptzylinder 27 aufweist. Aufgrund der Schnittbildung in Fig. 1 sind von der Zulauföffnung 33 nur Teilbereiche der radialen Zulauföffnung 33 an dem Hauptzylinder 27 sichtbar. In der in Fig. 1 dargestellten Schließstellung des Hauptventilkolbens 19 liegt dieser an einem unteren Anschlag 31 des Hauptzylinders 27 auf. In einer Öffnungsstellung des Hauptventilkolbens 19 ist dieser axial nach oben zu bewegen, bis der Hauptventilkolben 19 auf einem oberen Anschlag 32 des Hauptzylinders 27 aufliegt.

Der Hauptventilkolben 19 weist eine Zulaufsteuerbohrung 20 auf. Die Zulaufsteuerbohrung 20 weist einen axial ausgebildeten Abschnitt mit einem größeren Durchmesser auf und einen radial an dem Hauptventilkolben 19 ausgebildeten Abschnitt auf als einem Bereich 21 mit einem kleineren Durchmesser als einer Drosselbohrung 21 der Zulaufsteuerbohrung 20. Ferner ist an dem Hauptventilkolben 19 eine axiale zentrische Ablaufsteuerbohrung 22 mit einem größeren Durchmesser eingearbeitet. Der Durchmesser der Ablaufsteuerbohrung 22 ist dabei wesentlich größer als der Durchmesser der Drosselbohrung 21.

Ein Steuerraum 18 ist in axialer Richtung zwischen dem Polrohr 6, nämlich dem Polrohrbefestigungsteil 10 und dem Hauptventilkolben 19 ausgebildet und begrenzt und in radialer Richtung ist der Steuerraum 18 von dem Polrohrbefestigungsteil 10 und dem Hauptzylinder 27 begrenzt. Das obere Ende der Zulaufbohrung 20 sowie die Ablaufsteuerbohrung 22 münden beide in den Steuerraum 18. In der in Fig. 1 dargestellten Schließstellung des Ankers 2 wird der Anker 2 mit dem Steuerventilkolben 5 von der Schließfeder 4 auf den Hauptventilkolben 19 gedrückt, sodass die Ablaufsteuerbohrung 22 fluiddicht von dem Steuerventilkolben 5 verschlossen ist. In der Schließstellung des Hauptventilkolbens 19 liegt dieser auf dem unteren Anschlag 31 des Hauptzylinders 27 auf, sodass ein Ringraum 35 zwischen Hauptzylinder 27 und dem Hauptventilkolben 19 vorhanden ist. In der Schließstellung des Hauptventilkolbens 19 mündet die Zulauföffnung 33 in diesen Ringraum 35 und aufgrund des Aufliegens des Hauptventilkolbens 19 auf dem unteren Anschlag 33 besteht keine fluidleitende Verbindung von der Zulauföffnung 33 zu der Ablauföffnung 34 des Ventils 1, sodass das Ventil 1 geschlossen ist und keine Flüssigkeit oder Fluid von der Zulauföffnung 33 zu der Ablauföffnung 34 strömen kann. Durch die Drosselbohrung 21 und die Zulaufsteuerbohrung 20 kann das Fluid an der Zulauföffnung 33 in den Steuerraum 18 einströmen, jedoch nicht aus der Ablaufsteuerbohrung 22 ausströmen, da diese von dem Steuerventilkolben 5 verschlossen ist. In der Schließstellung des Hauptventilkolbens 19 entspricht somit der Druck des Fluides in dem Steuerraum 18 dem Druck des Fluids an der Zulauföffnung 33 und an dem Ringraum 35. Auf den Hauptventilkolben 19 wirkt somit in der Schließstellung an dem Steuerraum 18 in axialer Richtung eine Schließkraft aufgrund der axialen Fläche des Hauptventilkolbens 19 an dem Steuerraum 18 und eine Öffnungskraft aufgrund der axialen Kräfte des Fluides an dem Ringraum 35. Ferner wirkt auf den Hauptventilkolben 19 vorzugsweise noch eine Öffnungskraft aufgrund einer nicht dargestellten optionalen Hauptöffnungsfeder. Dabei sind die Schließkräfte größer als die Öffnungskräfte, da der axiale Flächenanteil des Hauptventilkolbens 19 an dem Steuerraum 18 wesentlich größer ist als an dem Ringraum 35.

Zum Öffnen des Ventils 1 wird der Elektromagnet 37 bestromt, sodass dadurch ein magnetischer Fluss 55 auftritt, welcher den Anker 2 mit dem Steuerventilkolben 5 nach oben bewegt, entgegen der von der Schließfeder 4 auf den Anker 2 aufgebrachten Schließkraft, sodass dadurch ein oberes Ende des Ankers 2 auf dem axialen Ende als Ankeranschlag 8 der Bohrung 7 des Polrohrbefestigungsteils 10 aufliegt. Dadurch wird die Ablaufsteuerbohrung 22 geöffnet und aufgrund des wesentlich größeren Durchmessers der Ablaufsteuerbohrung 22 als der Drosselbohrung 21 strömt dadurch mehr Fluid durch die Ablaufsteuerbohrung 22 aus dem Steuerraum 18 aus als durch die Drosselbohrung 21 von dem Ringraum 35 durch die Zulaufsteuerbohrung 21 in den Steuerraum 18 einströmen kann. Dadurch sinkt der Druck des Fluides in dem Steuerraum 18 ab und dadurch verringern sich auch die auf den Hauptventilkolben 19 an dem Steuerraum 18 wirkenden Schließkräfte, sodass dadurch der Hauptventilkolben 19 gemäß der Darstellung in Fig. 1 in axialer Richtung von den größeren Öffnungskräften nach oben bewegt wird, bis der Hauptventilkolben 19 auf dem oberen Anschlag 32 aufliegt. Dadurch liegt der Hauptventilkolben 19 nicht mehr auf dem unteren Anschlag 31 auf und es besteht eine fluidleitende Verbindung von der Zulauföffnung 33 zu der Ablauföffnung 34 und das Ventil 1 ist geöffnet. Zum Schließen des Ventils 1 wird die Bestromung des Elektromagneten 37 unterbrochen. Der magnetische Fluss 55 des Elektromagneten 37 wird an dem Polrohr 6 überwiegend durch den zweiten Abschnitt 11 als dem Polrohrstutzen 12 aus dem weichmagnetischen Material geleitet und nur in einem geringen Umfang durch den ersten Abschnitt 9 als dem Polrohrbefestigungsteil 10 aus dem mechanisch harten und hartmagnetischen Material geleitet. Nach einer Unterbrechung der Bestromung des Elektromagneten 37 wird somit der magnetische Fluss 55 in sehr kurzer Zeit unterbrochen, das das Polrohr 6 einen geringen Restmagnetismus in sehr kurzer Zeit aufweist, sodass dadurch sofort der Anker 2 nach der Unterbrechung der Bestromung der Spule 38 von der Schließfeder 4 von der in Fig. 1 nicht dargestellten Öffnungsstellung des Ankers 2, an welche der Anker 2 im Kontakt zu dem axialen Ende der Bohrung 7 steht, von der Schließfeder 4 in die in Fig. 1 dargestellte Schließstellung bewegt wird und dadurch die Ablaufsteuerbohrung 22 verschlossen wird und ferner dabei auch von der Schließfeder 4 aufgrund des mechanischen Kontaktes des Steuerventilkolbens 5 mit dem Hauptventilkolben 19 von der Schließfeder 4 auf den Hauptventilkolben 19 eine zusätzliche Schließkraft aufgebracht wird, sodass der Hauptventilkolben 19 in die Schließstellung bewegt wird.

Eine fiktive Ebene 24, welche senkrecht zu der Längsachse 23 des Ventils 1 ausgebildet ist, schneidet den zweiten Abschnitt 11 des Polrohres 6 und den Elektromagneten 37, sodass der zweite Abschnitt 11, nämlich der Polrohrstutzen 12 auch teilweise radial innerhalb des Elektromagneten 37 angeordnet ist und dies ist erforderlich, um mittels des Polrohrstutzens 12 den magnetischen Fluss 55 gut leiten zu können. Eine weitere fiktive Ebene 25 senkrecht zu der Längsachse 23 schneidet den ersten Abschnitt 9 als dem Polrohrbefestigungsteil 10 des Polrohres 6 und den Elektromagneten 37. Dies ist erforderlich, da der Anker 2 radial innerhalb des Elektromagneten 37 liegt zur Leitung des magnetischen Flusses 55 mit dem Anker 2 und das Polrohrbefestigungsteil 10 auch einen Anschlag für den Anker 2 bildet, sodass vorzugsweise die fiktive Ebene 25 sowohl den Anschlag für den Anker 2 an dem ersten Abschnitt 9 schneidet sowie den Elektromagneten 37. Eine weitere fiktive Ebene 26 senkrecht zu der Längsachse 23 schneidet den zweiten Abschnitt 11, nämlich den Polrohrstutzen 12 des Polrohres 6, außerhalb des Elektromagneten 37. Der Polrohrstutzen 12 liegt radial auch außerhalb des Elektromagneten 37 und dies ist erforderlich, um an dem ersten Absatz 44 des Polrohrstutzens 12 die Elektromagnetengruppe 36 axial vorspannen zu können.

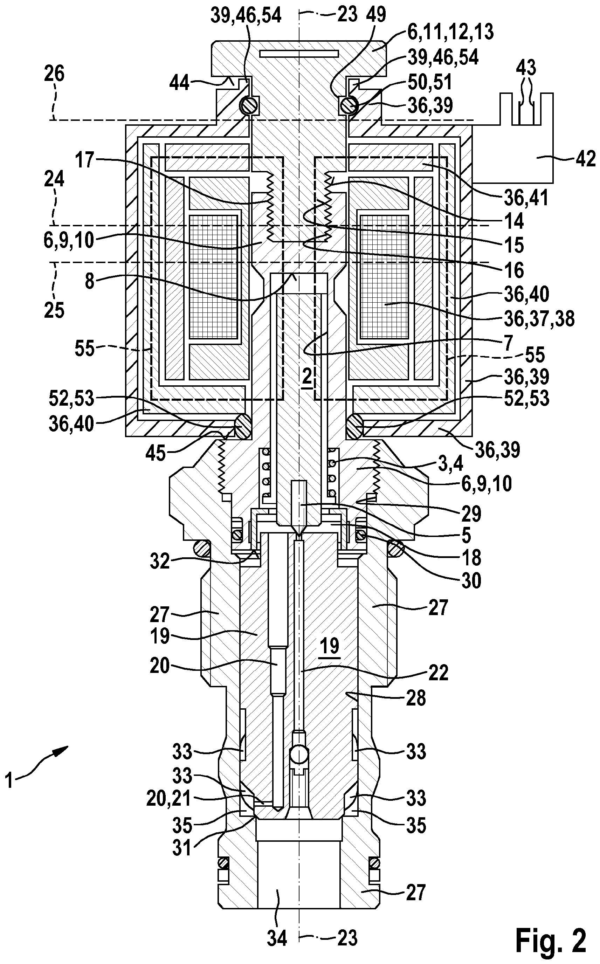

In Fig. 2 ist ein zweites Ausführungsbeispiel des Ventils 1 dargestellt. Im Nachfolgenden werden im Wesentlichen nur die Unterschiede zu dem ersten Ausführungsbeispiel gemäß Fig. 1 beschrieben. Das Magnetgehäuse 39 weist einen rohr- bzw. ringförmigen Fortsatz 54 aus einem elastischen Material auf, sodass dadurch das elastische Element 46 einteilig von dem rohrförmigen Fortsatz 54 aus einem elastischen Material an dem Magnetgehäuse 39 gebildet ist.

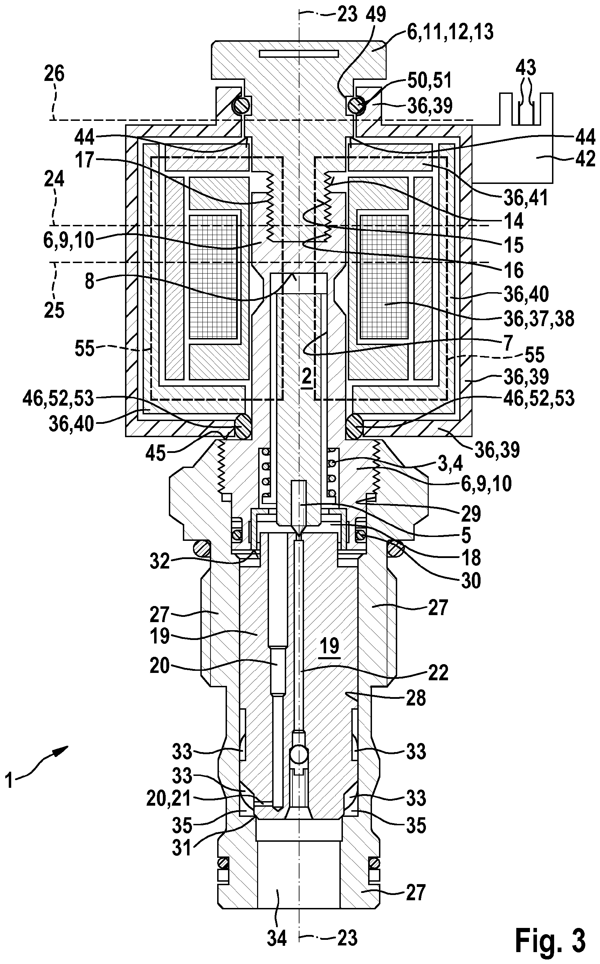

In Fig. 3 ist ein drittes Ausführungsbeispiel des Ventils 1 dargestellt. Im Nachfolgenden werden im Wesentlichen nur die Unterschiede zu dem ersten Ausführungsbeispiel gemäß Fig. 1 beschrieben. Der erste Absatz 44 an dem Polrohrstutzen 12 liegt unmittelbar auf dem Magnetring 41 auf und ein oberes Ende des Magnetgehäuses 39 weist einen Abstand zu dem Polrohrstutzen 12 auf. Die Druckvorspannung ist somit an dem Polrohrstutzen 12 von dem ersten Absatz 44 in den Magnetring 41 eingebracht. Die zweite untere Dichtung 52 ist in axialer Richtung zwischen dem Magnettopf 40 und dem zweiten Absatz 45 vorgespannt und in radialer Richtung zwischen dem Magnetgehäuse 39 und dem ersten Abschnitt des Polrohres 6, sodass dadurch die zweite Dichtung 52 auch die Funktion des elastischen Elements 46 übernimmt. Abweichend hiervon kann die zweite untere Dichtung 52 mit der Funktion des elastischen Elementes 46 nur in axialer Richtung zwischen dem Magnetgehäuse 39 und dem zweiten Absatz 45 des ersten Abschnittes 9 des Polrohres 6 vorgespannt sein (nicht dargestellt).

In Fig. 4 ist ein hydraulisches Hybridsystem 56 dargestellt. Das hydraulische Hybridsystem 56 umfasst einen Verbrennungsmotor 57 und zwei Wellen 58. Mit dem Verbrennungsmotor 57 und der Welle 58 wird die hydraulische Pumpe 60 angetrieben und dadurch Hydraulikflüssigkeit von der hydraulischen Pumpe 60 zu dem hydraulischen Motor 59 gefördert und umgekehrt. Der hydraulische Motor 59 und die hydraulische Pumpe 60 sind dabei jeweils als Schrägscheibenmaschinen 61 ausgebildet, so dass beide Schrägscheibenmaschinen 61 ein hydraulisches Getriebe bilden. Dadurch kann mittels der Hydraulikleitungen 62, welche den hydraulischen Motor 59 mit der hydraulischen Pumpe 60 jeweils fluidleitend verbinden, die Welle 58 an dem hydraulischen Motor 59 angetrieben und von der Welle 58 wird ein Differentialgetriebe 63 angetrieben. Mit dem Differentialgetriebe 63 sind zwei Radwellen 65 sowie jeweils ein Antriebsrad 64 an den Radwellen 65 verbunden. Dadurch können Antriebsräder 64 des nicht dargestellten Kraftfahrzeuges durch einen hydraulischen Antriebsteilstrang mit dem hydraulischen Motor 59 und der hydraulischen Pumpe 60 angetrieben werden. Aufgrund der Ausbildung des hydraulischen Motors 59 und der hydraulischen Pumpe 60 als Schrägscheibenmaschine 61 dient der hydraulische Motor 59 und die hydraulische Pumpe 60 auch als stufenloses hydraulisches Getriebe. Zweckmäßig weist das hydraulische Hybridsystem 56 auch einen mechanischen Antriebsteilstrang mit einem mechanischen Getriebe auf zur ausschließlichen mechanischen Kraftübertragung von dem Verbrennungsmotor 57 zu den beiden Antriebsrädern 64 (nicht dargestellt).

Bei einem Betrieb der hydraulischen Pumpe 60 kann ein Teil der Hydraulikflüssigkeit nicht zu dem hydraulischen Motor 59, sondern durch Hydraulikleitungen 62 und nicht dargestellter Umleitventile von einem Niederdruckspeicher 68 zu einem Hochdruckspeicher 67 geleitet und gespeichert und dadurch hydraulische Energie in den Hochdruckspeicher 67 gespeichert werden. Ferner kann in einem Rekuperationsbetrieb der hydraulische Motor 59 auch als hydraulische Pumpe 60 betrieben werden um dadurch in einem Rekuperationsbetrieb kinetische Energie des nicht dargestellten Kraftfahrzeuges zu speichern durch das Leiten von Hydraulikflüssigkeit von dem Niederdruckspeicher 68 und durch den hydraulischen Motor 59, welcher als hydraulische Pumpe 60 fungiert, in den Hochdruckspeicher 67, weil die hydraulische Pumpe 60 von der Welle 58 und damit den Antriebsrädern 64 angetrieben ist. An dem Hochdruckspeicher 67 mit einem maximalen Druck der Hydraulikflüssigkeit von 500 bar ist das oben beschriebene Ventil 1 angeordnet, so dass bei dem geöffneten Ventil 1 die Hydraulikflüssigkeit aus dem Hochdruckspeicher 67 ausströmt und durch das Leiten der Hydraulikflüssigkeit unter einem höheren Druck von dem Hochdruckspeicher 67, durch den hydraulischen Motor 59 und zu dem Niederdruckspeicher 68 kann das Kraftfahrzeug hydraulisch angetrieben werden.

Insgesamt betrachtet sind mit dem erfindungsgemäßen Ventil 1 und dem erfindungsgemäßen hydraulischen Hybridsystem 56 wesentliche Vorteile verbunden. Das Ventil 1 als ein elektromagnetisch betätigbares Ventil 1, bei der der Hauptventilkolben 19 hydraulisch zwischen der Schließ- und Öffnungsstellung bewegt werden kann, kann einerseits den hohen mechanischen Beanspruchungen bei großen Drücken an der Zulauföffnung 33, zum Beispiel von 500 bar, standhalten, da das Polrohrbefestigungsteil 10 aus einem mechanisch hartem und hartmagnetischen Material aufgebaut ist und ferner weist das Polrohr 6 nach einem Abschalten des Elektromagneten 37 einen geringen Restmagnetismus auf, da ein Großteil des magnetischen Flusses durch den Polrohrstutzen 12 aus dem weichmagnetischen Material geleitet wird und nur zu einem geringen Anteil durch das Polrohrbefestigungsteil 10 aus dem hartmagnetischen Material.

## Patentansprüche

1. Ventil (1), insbesondere für ein hydraulisches Hybridsystem (56), umfassend
- einen Elektromagneten (37) zum Bewegen eines Ankers (2),
- einen Steuerventilkolben (5), welcher in mechanischer Wirkverbindung mit dem beweglichen Anker (2) steht, so dass eine Bewegung des Ankers (2) eine Bewegung des Steuerventilkolbens (5) bedingt und der Steuerventilkolben (5) zwischen einer ersten Steuerposition und einer zweiten Steuerposition bewegbar ist,
- den beweglichen Anker (2),
- ein Polrohr (6) mit einer Bohrung (7) zur Lagerung des beweglichen Ankers (2),
- einen Steuerraum (18) in dem der Druck eines Fluides, insbesondere einer Flüssigkeit aufgrund einer unterschiedlichen Steuerposition des Steuerventilkolbens (5) veränderbar ist,
- einen aufgrund eines unterschiedlichen Druckes des Fluides in dem Steuerraum (18) hydraulisch zwischen einer Schließstellung und einer Öffnungsstellung beweglichen Hauptventilkolben (19), so dass in der Schließstellung des Hauptventilkolbens (19) das Ventil (1) geschlossen und in der Öffnungsstellung des Hauptventilkolbens (19) das Ventil (1) geöffnet ist, wobei das Polrohr (6) einen ersten Abschnitt (9) mit der Bohrung (7) und einen zweiten Abschnitt (11) außerhalb der Bohrung (7) aufweist, **dadurch gekennzeichnet, dass** der erste Abschnitt (9) aus einem mechanisch hartem und einem hartmagnetischen Material aufgebaut ist und der zweite Abschnitt (11) aus einem weichmagnetischen Material aufgebaut ist, um einen geringen Restmagnetismus an dem Anker (2) nach einem Abschalten des Elektromagneten (37) und eine große mechanische Widerstandsfähigkeit des ersten Abschnittes (9) des Polrohres (6) zu erhalten,
wobei
das mechanisch harte Material des ersten Abschnittes (9) eine Härte nach Rockwell von mehr als 30 HRC aufweist
und
das weichmagnetische Material des zweiten Abschnittes (11) eine Koerzitivfeldstärke von kleiner als 1000 A/m aufweist
und
das hartmagnetische Material des ersten Abschnittes (9) eine Koerzitivfeldstärke von größer als 1000 A/m aufweist und
das Material des ersten Abschnittes (9) Vergütungsstahl ist
und
das Material des zweiten Abschnittes (11) Automatenstahl ist.

2. Ventil nach Anspruch 1,
**dadurch gekennzeichnet, dass**
das Ventil (1) eine Längsachse (23) aufweist, insbesondere die Längsachse (23) identisch ist zu einer Bewegungsachse des Ankers (2), und eine fiktive Ebene (24) senkrecht zu der Längsachse (23) den zweiten Abschnitt (11) und den Elektromagneten (37) schneidet und vorzugsweise den ersten Abschnitt (9) schneidet
und
der minimale axiale Abstand des Ankers (2) zu dem zweiten Abschnitt (11) des Polrohres (6) kleiner ist als der Durchmesser des Ankers (2) und
der minimale axiale Abstand des Ankers (2) zu dem zweiten Abschnitt (11) des Polrohres (6) zwischen dem 0,5- oder 3-Fachen der radialen Wandstärke des ersten Abschnitt (9) des Polrohres (6) an dem Anker (2) beträgt
und
der erste und zweite Abschnitt (9, 11) des Polrohres (6) wenigstens teilweise unterschiedliche axiale Abschnitte (9, 11) des Polrohres (6) sind.

3. Ventil nach einem oder mehreren der vorhergehenden Ansprüche,
**dadurch gekennzeichnet, dass**
das Ventil (1) einen Hauptzylinder (27) umfasst und der Hauptventilkolben (19) an dem Hauptzylinder (27) beweglich gelagert ist
und
das Ventil (1) den Hauptzylinder (27) umfasst und eine Zulauföffnung (33) und eine Ablauföffnung (34) des Ventils (1) an dem Hauptzylinder (27) ausgebildet ist und in der Schließstellung des Hauptventilkolbens (19) die Zulauföffnung (33) von dem Hauptventilkolben (19) mittelbar oder unmittelbar verschlossen ist und in der Öffnungsstellung des Hauptventilkolbens (19) die Zulauföffnung (33) geöffnet ist, so dass eine fluidleitende Verbindung zwischen der Zulauföffnung (33) und der Ablauföffnung (34) besteht.

4. Ventil nach Anspruch 3,
**dadurch gekennzeichnet, dass**
das Polrohr (6), insbesondere ausschließlich, an dem ersten Abschnitt (9) mit dem Hauptzylinder (27) verbunden ist, insbesondere mit einer Schraub- oder Pressverbindung.

5. Ventil nach einem oder mehreren der vorhergehenden Ansprüche,
**dadurch gekennzeichnet, dass**
der Steuerraum (18) in fluidleitendem Kontakt zu dem ersten Abschnitt (9) des Polrohres (6) steht, insbesondere der Steuerraum (18) von dem ersten Abschnitt (9) des Polrohres (6) begrenzt ist,
und
der Steuerraum (18) in keinem fluidleitendem Kontakt zu dem zweiten Abschnitt (11) des Polrohres (6) steht.

6. Ventil nach einem oder mehreren der vorhergehenden Ansprüche,
**dadurch gekennzeichnet, dass**
eine fiktive Ebene (25), insbesondere sämtliche fiktive Ebenen (25),
senkrecht zu der Längsachse (23) des Ventils (1), welche den Elektromagneten (37) schneiden, auch den ersten Abschnitt (9) des Polrohres (6) schneiden
und
eine fiktive Ebene (26) senkrecht zu der Längsachse (23) des Ventils (1), welche den zweiten Abschnitt (11) des Polrohres (6) schneidet, außerhalb des Elektromagneten (37) ist.

7. Ventil nach einem oder mehreren der vorhergehenden Ansprüche,
**dadurch gekennzeichnet, dass**
der erste Abschnitt (9) und der zweite Abschnitt (11) des Polrohres (6) aus getrennten Bauteilen (9, 11) ausgebildet sind.

8. Ventil nach Anspruch 7,
**dadurch gekennzeichnet, dass**
der erste Abschnitt (9) des Polrohres (6) von einem Polrohrbefestigungsteil (10) und der zweite Abschnitt (11) des Polrohres (6) von einem Polrohrstutzen (12), insbesondere einer Polrohrschraube (13), gebildet ist.

9. Ventil nach Anspruch 7 oder 8,
**dadurch gekennzeichnet, dass**
der erste Abschnitt (9) des Polrohres (6) mit einer Schraub- oder Pressverbindung (17) mit dem zweiten Abschnitt (11) des Polrohres (6) verbunden ist, insbesondere ein Außengewinde (14) des Polrohrstutzens (12) mit einem Innengewinde (15) an dem Polrohrbefestigungsteil (10) verschraubt ist.

10. Ventil nach einem oder mehreren der vorhergehenden Ansprüche,
**dadurch gekennzeichnet, dass**
das Ventil (1) eine Elektromagnetenbaugruppe (36) umfasst mit dem Elektromagneten (37) als Spule (38), einem Magnetgehäuse (39), vorzugsweise einen Magnettopf (40), vorzugsweise einem Magnetring (41), vorzugsweise einem elektrischen Stecker (42).

11. Ventil nach Anspruch 10,
**dadurch gekennzeichnet, dass**
das Polrohr (6) einen ersten Absatz (44), insbesondere an dem zweiten Abschnitt (11) des Polrohres (6), und einen zweiten Absatz (45), insbesondere an dem ersten Abschnitt (9) des Polrohres (6), aufweist und die Elektromagnetenbaugruppe (36) zwischen dem ersten und zweiten Absatz (9, 11) unter einer Druckvorspannung eingespannt ist, insbesondere mit einem, vorzugsweise ringförmigen, elastischen Element (46).

12. Ventil nach Anspruch 10 oder 11,
**dadurch gekennzeichnet, dass**
die Elektromagnetenbaugruppe (36), insbesondere das Magnetgehäuse (39), mit einer ersten, vorzugsweise ringförmigen, Dichtung (50) und einer zweiten, vorzugsweise ringförmigen Dichtung (52), bezüglich des Polrohres (6) abgedichtet sind und die erste und zweite Dichtung (50, 52) einen axialen Abstand in Richtung der Längsachse (23) des Ventils (1) aufweisen.

13. Ventil nach Anspruch 11 oder 12,
**dadurch gekennzeichnet, dass**
das elastische Element (46) von der ersten und/oder zweiten Dichtung (50, 52) gebildet ist.

14. Hydraulisches Hybridsystem (56) für ein Kraftfahrzeug, umfassend
- einen hydraulischen Motor (59) zur Umwandlung von hydraulischer Energie in mechanische Energie,
- eine hydraulische Pumpe (60) zur Umwandlung von mechanischer Energie in hydraulische Energie,
- einen Hochdruckspeicher (67) zur Speicherung von hydraulischer Energie,
- einen Niederdruckspeicher (68) zur Speicherung von hydraulischer Energie,
- wenigstens eine Hydraulikleitung (62),
- wenigstens ein Ventil (1) zur Steuerung eines Volumenstromes einer Hydraulikflüssigkeit,
**dadurch gekennzeichnet, dass**
das wenigstens eine Ventil (1) gemäß einem oder mehrerer der vorhergehenden Ansprüche ausgebildet ist.

## Claims

1. Valve (1), in particular for a hydraulic hybrid system (56), comprising
- an electromagnet (37) for moving an armature (2),
- a control valve piston (5) which is in a mechanical operative connection with the movable armature (2), with the result that a movement of the armature (2) necessitates a movement of the control valve piston (5), and the control valve piston (5) can be moved between a first control position and a second control position,
- the movable armature (2),
- a pole tube (6) with a bore (7) for mounting the movable armature (2),
- a control space (18), in which the pressure of a fluid, in particular a liquid, can be changed on account of a different control position of the control valve piston (5),
- a main valve piston (19) which can be moved hydraulically between a closed position and an open position on account of a different pressure of the fluid in the control space (18), with the result that the valve (1) is closed in the closed position of the main valve piston (19) and the valve (1) is open in the open position of the main valve piston (19),
the pole tube (6) having a first section (9) with the bore (7) and a second section (11) outside the bore (7), **characterized in that** the first section (9) is constructed from a mechanically hard and a magnetically hard material, and the second section (11) is constructed from a magnetically soft material, in order to obtain a low residual magnetism at the armature (2) after the electromagnet (37) is switched off, and to obtain a great mechanical durability of the first section (9) of the pole tube (6),
the mechanically hard material of the first section (9) having a hardness in accordance with Rockwell of more than 30 HRC, and
the magnetically soft material of the second section (11) having a coercive field strength of less than 1000 A/m, and
the magnetically hard material of the first section (9) having a coercive field strength of greater than 1000 A/m, and
the material of the first section (9) being tempering steel, and
the material of the second section (11) being machining steel.

2. Valve according to Claim 1,
**characterized in that**
the valve (1) has a longitudinal axis (23), in particular the longitudinal axis (23) is identical to a movement axis of the armature (2), and an imaginary plane (24) perpendicularly with respect to the longitudinal axis (23) intersects the second section (11) and the electromagnet (37) and preferably intersects the first section (9), and
the minimum axial spacing of the armature (2) from the second section (11) of the pole tube (6) is smaller than the diameter of the armature (2), and
the minimum axial spacing of the armature (2) from the second section (11) of the pole tube (6) is between 0.5 and 3 times the radial wall thickness of the first section (9) of the pole tube (6) at the armature (2), and
the first and second section (9, 11) of the pole tube (6) are at least partially different axial sections (9, 11) of the pole tube (6).

3. Valve according to one or more of the preceding claims,
**characterized in that**
the valve (1) comprises a main cylinder (27), and the main valve piston (19) is mounted movably on the main cylinder (27), and
the valve (1) comprises the main cylinder (27), and an inflow opening (33) and an outflow opening (34) of the valve (1) are configured on the main cylinder (27), and the inflow opening (33) is closed indirectly or directly by the main valve piston (19) in the closed position of the main valve piston (19), and the inflow opening (33) is open in the open position of the main valve piston (19), with the result that there is a fluid-conducting connection between the inflow opening (33) and the outflow opening (34).

4. Valve according to Claim 3,
**characterized in that**
the pole tube (6) is connected, in particular exclusively, at the first section (9) to the main cylinder (27), in particular by way of a screwed or pressed connection.

5. Valve according to one or more of the preceding claims,
**characterized in that**
the control space (18) is in fluid-conducting contact with the first section (9) of the pole tube (6), in particular the control space (18) is delimited by the first section (9) of the pole tube (6), and
the control space (18) is not in fluid-conducting contact with the second section (11) of the pole tube (6).

6. Valve according to one or more of the preceding claims,
**characterized in that**
an imaginary plane (25), in particular all imaginary planes (25), perpendicularly with respect to the longitudinal axis (23) of the valve (1) which intersects/intersect the electromagnet (37) also intersects/intersect the first section (9) of the pole tube (6), and
an imaginary plane (26) perpendicularly with respect to the longitudinal axis (23) of the valve (1) which intersects the second section (11) of the pole tube (6) is outside the electromagnet (37).

7. Valve according to one or more of the preceding claims,
**characterized in that**
the first section (9) and the second section (11) of the pole tube (6) are configured from separate components (9, 11).

8. Valve according to Claim 7,
**characterized in that**
the first section (9) of the pole tube (6) is formed from a pole tube fastening part (10), and the second section (11) of the pole tube (6) is formed from a pole tube socket (12), in particular a pole tube screw (13).

9. Valve according to Claim 7 or 8,
**characterized in that**
the first section (9) of the pole tube (6) is connected to the second section (11) of the pole tube (6) by way of a screwed or pressed connection (17), in particular an external thread (14) of the pole tube socket (12) is screwed to an internal thread (15) on the pole tube fastening part (10).

10. Valve according to one or more of the preceding claims,
**characterized in that**
the valve (1) comprises an electromagnet assembly (36) with the electromagnet (37) as coil (38), a magnet housing (39), preferably a magnet pot (40), preferably a magnet ring (41), preferably an electric plug (42).

11. Valve according to Claim 10,
**characterized in that**
the pole tube (6) has a first shoulder (44), in particular on the second section (11) of the pole tube (6), and a second shoulder (45), in particular on the first section (9) of the pole tube (6), and the electromagnet assembly (36) is clamped in between the first and second shoulder (9, 11) under a compressive prestress, in particular with an elastic element (46) which is preferably annular.

12. Valve according to Claim 10 or 11,
**characterized in that**
the electromagnet assembly (36), in particular the magnet housing (39), is sealed with regard to the pole tube (6) by way of a first, preferably annular seal (50) and a second, preferably annular seal (52), and the first and second seal (50, 52) are at an axial spacing in the direction of the longitudinal axis (23) of the valve (1).

13. Valve according to Claim 11 or 12,
**characterized in that**
the elastic element (46) is formed by the first and/or second seal (50, 52).

14. Hydraulic hybrid system (56) for a. motor vehicle, comprising
- a hydraulic motor (59) for converting hydraulic energy into mechanical energy,
- a hydraulic pump (60) for converting mechanical energy into hydraulic energy,
- a high-pressure reservoir (67) for storing hydraulic energy,
- a low-pressure reservoir (68) for storing hydraulic energy,
- at least one hydraulic line (62),
- at least one valve (1) for controlling a volumetric flow of a hydraulic liquid,
**characterized in that**
the at least one valve (1) is configured according to one or more of the preceding claims.

## Revendications

1. Vanne (1), notamment pour un système hybride hydraulique (56), comprenant
- un électroaimant (37) destiné à déplacer un induit (2),
- un piston de vanne pilote (5) qui se trouve en liaison fonctionnelle mécanique avec l'induit (2) mobile, de sorte qu'un mouvement de l'induit (2) conditionne un mouvement du piston de vanne pilote (5) et le piston de vanne pilote (5) peut être déplacé entre une première position de commande et une deuxième position de commande,
- l'induit (2) mobile,
- un tube polaire (6) muni d'un orifice (7) servant à supporter l'induit (2) mobile,
- un espace de commande (18) dans lequel peut être modifiée la pression d'un fluide, notamment d'un liquide, en raison d'une position de commande différente du piston de vanne pilote (5),
- un piston de vanne principale (19) qui peut être déplacé hydrauliquement entre une position de fermeture et une position d'ouverture du fait d'une pression différente du fluide dans la chambre de commande (18), de sorte que dans la position de fermeture du piston de vanne principale (19), la vanne (1) est fermée, et dans la position d'ouverture du piston de vanne principale (19), la vanne (1) est ouverte,
le tube polaire (6) possédant une première portion (9) munie de l'orifice (7) et une deuxième portion (11) en-dehors de l'orifice (7),
**caractérisée en ce que** la première portion (9) est constituée d'un matériau mécaniquement dur et magnétique dur et la deuxième portion (11) est constituée d'un matériau magnétique doux, afin d'obtenir un faible magnétisme résiduel au niveau de l'induit (2) après une déconnexion de l'électroaimant (37) et une grande résistance mécanique de la première portion (9) du tube polaire (6),
le matériau mécaniquement dur de la première portion (9) présentant une dureté selon Rockwell supérieure à 30 HRC
et
le matériau magnétique doux de la deuxième portion (11) présentant une intensité de champ coercitif inférieure à 1000 A/m
et
le matériau mécaniquement dur de la première portion (9) présentant une intensité de champ coercitif supérieure à 1000 A/m
et
le matériau de la première portion (9) étant de l'acier de traitement
et
le matériau de la deuxième portion (11) étant de l'acier de décolletage.

2. Vanne selon la revendication 1,
**caractérisée en ce que**
la vanne (1) possède un axe longitudinal (23), notamment l'axe longitudinal (23) identique à un axe de mouvement de l'induit (2), et un plan fictif (24) perpendiculaire à l'axe longitudinal (23) croisant la deuxième portion (11) et l'électroaimant (37) et croisant de préférence la première portion (9)
et
l'écart axial minimal de l'induit (2) par rapport à la deuxième portion (11) du tube polaire (6) étant inférieur au diamètre de l'induit (2)
et
l'écart axial minimal de l'induit (2) par rapport à la deuxième portion (11) du tube polaire (6) étant compris entre 0,5 et 3 fois l'épaisseur de paroi radiale de la première portion (9) du tube polaire (6) au niveau de l'induit (2)
et
la première et la deuxième portion (9, 11) du tube polaire (6) étant au moins partiellement des portions (9, 11) axiales différentes du tube polaire (6).

3. Vanne selon une ou plusieurs des revendications précédentes,
**caractérisée en ce que**
la vanne (1) comprend un cylindre principal (27) et le piston de vanne principale (19) étant monté mobile sur le cylindre principal (27)
et
la vanne (1) comprend le cylindre principal (27) et une ouverture d'arrivée (33) et une ouverture d'écoulement (34) de la vanne (1) sont formées sur le cylindre principal (27) et dans la position de fermeture du piston de vanne principale (19), l'ouverture d'arrivée (33) est fermée indirectement ou directement par le piston de vanne principale (19) et, dans la position d'ouverture du piston de vanne principale (19), l'ouverture d'arrivée (33) est ouverte, de sorte qu'il existe une liaison fluidique entre l'ouverture d'arrivée (33) et l'ouverture d'écoulement (34).

4. Vanne selon la revendication 3,
**caractérisée en ce que**
le tube polaire (6), notamment exclusivement, est relié au niveau de la première portion (9) au cylindre principal (27), notamment par une liaison vissée ou à ajustement serré.

5. Vanne selon une ou plusieurs des revendications précédentes,
**caractérisée en ce que**
l'espace de commande (18) se trouve en contact de conduction de fluide avec la première portion (9) du tube polaire (6), l'espace de commande (18) est notamment délimité par la première portion (9) du tube polaire (6),
et
l'espace de commande (18) ne se trouve pas en contact de conduction de fluide avec la deuxième portion (11) du tube polaire (6).

6. Vanne selon une ou plusieurs des revendications précédentes,
**caractérisée en ce que**
un plan fictif (25), notamment tous les plans fictifs (25) perpendiculaires à l'axe longitudinal (23) de la vanne (1) qui croisent l'électroaimant (37) et croisent également la première portion (9) du tube polaire (6) et
un plan fictif (26) perpendiculaire à l'axe longitudinal (23) de la vanne (1), qui croise la deuxième portion (11) du tube polaire (6), se trouve en dehors de l'électroaimant (37).

7. Vanne selon une ou plusieurs des revendications précédentes,
**caractérisée en ce que**
la première portion (9) et la deuxième portion (11) du tube polaire (6) sont constituées d'éléments structuraux (9, 11) séparés.

8. Vanne selon la revendication 7,
**caractérisée en ce que**
la première portion (9) du tube polaire (6) est formée par une partie de fixation du tube polaire (10) et la deuxième portion (11) du tube polaire (6) est formée par un manchon de tube polaire (12), notamment une vis de tube polaire (13).

9. Vanne selon la revendication 7 ou 8,
**caractérisée en ce que**
la première portion (9) du tube polaire (6) est reliée par une liaison vissée ou à ajustement serré (17) à la deuxième portion (11) du tube polaire (6), notamment un filet extérieur (14) du manchon de tube polaire (12) est vissé avec un filet intérieur (15) à la partie de fixation du tube polaire (10).

10. Vanne selon une ou plusieurs des revendications précédentes,
**caractérisée en ce que**
la vanne (1) comprend un sous-ensemble électroaimant (36) avec l'électroaimant (37) en tant que bobine (38), un corps magnétique (39), de préférence un pot magnétique (40), de préférence un anneau magnétique (41), de préférence une fiche électrique (42).

11. Vanne selon la revendication 10,
**caractérisée en ce que**
le tube polaire (6) possède un premier talon (44), notamment au niveau de la deuxième portion (11) du tube polaire (6), et un deuxième talon (45), notamment au niveau de la première portion (9) du tube polaire (6), et le sous-ensemble électroaimant (36) est enserré entre le premier et le deuxième talon (9, 11) sous une précontrainte de pression, notamment avec un élément élastique (46), de préférence annulaire.

12. Vanne selon la revendication 10 ou 11,
**caractérisée en ce que**
le sous-ensemble électroaimant (36), notamment le corps magnétique (39), est rendu étanche par rapport au tube polaire (6) avec une première garniture d'étanchéité (50), de préférence annulaire, et une deuxième garniture d'étanchéité (52), de préférence annulaire, et les première et deuxième garnitures d'étanchéité (50, 52) présentent un écart axial dans la direction de l'axe longitudinal (23) de la vanne (1).

13. Vanne selon la revendication 11 ou 12,
**caractérisée en ce que**
l'élément élastique (46) est formé par la première et/ou la deuxième garniture d'étanchéité (50, 52).

14. Système hybride hydraulique (56) pour un véhicule automobile, comprenant
- un moteur hydraulique (59) destiné à convertir de l'énergie hydraulique en énergie mécanique,
- une pompe hydraulique (60) destinée à convertir de l'énergie mécanique en énergie hydraulique,
- un accumulateur à haute pression (67) destiné à accumuler de l'énergie hydraulique,
- un accumulateur à basse pression (68) destiné à accumuler de l'énergie hydraulique,
- au moins une conduite hydraulique (62),
- au moins une vanne (1) destinée à commander un débit volumique d'un liquide hydraulique,
**caractérisé en ce que**
l'au moins une vanne (1) est configurée selon une ou plusieurs des revendications précédentes.
